Europäisches Patentamt

European Patent Office

Office européen des brevets

(11) Veröffentlichungsnummer: **0 571 788 A2**

## (12) EUROPÄISCHE PATENTANMELDUNG

(21) Anmeldenummer: **93107195.5**

(22) Anmeldetag: **04.05.93**

(51) Int. Cl.5: **H04L 27/38**

(30) Priorität: **15.05.92 DE 4216156**

(43) Veröffentlichungstag der Anmeldung:
**01.12.93 Patentblatt 93/48**

(84) Benannte Vertragsstaaten:
**DE FR IT NL SE**

(71) Anmelder: **ANT Nachrichtentechnik GmbH**
**Gerberstrasse 33**
**D-71522 Backnang(DE)**

(72) Erfinder: **Jentsch, Peter, Dipl.-Ing.**
**Drosselweg 12**
**W-7052 Schwaikheim(DE)**
Erfinder: **Herbig, Peter, Dipl.-Ing.**
**Potsdamer Ring 32**
**W-7150 Backnang(DE)**

(54) **Anordnung zur Trägerrückgewinnung in einem OAM-Empfänger.**

(57) Es soll eine Anordnung geschaffen werden, die in der Lage ist, bei einer hohen anfänglichen Frequenzablage den Träger des Empfängeroszillators auf den Träger des QAM-Empfangssignals zu synchronisieren.
Ein Gebietsentscheider (22) in dem QAM-Empfäger teilt die Ebene der komplexen QAM-Empfangssignalwerte in aktive Gebiete und in passive Gebiete auf, wobei bei Eintreffen eines QAM-Empfangssignalwerts in eines der aktiven Gebiete ein Phasenkorrektursignal für den Empfängeroszillator (17) erzeugt wird. Es gibt rechtsaktive Gebiete ($R_1$, $R_2$, $R_3$, $R_4$) von denen ein Phasenkorrektursignal ausgeht, das eine Rechtsdrehung der Phase des Trägeroszillators bewirkt, und es gibt linksaktive Gebiete ($L_1$, $L_2$, $L_3$, $L_4$), von denen ein Phasenkorrektursignal ausgeht, das eine Linksdrehung der Trägerphase des Empfängeroszillators bewirkt. Die aktiven Gebiete sind so angeordnet und besitzen eine solche Form, daß das von ihnen initiierte Phasenkorrektursignal den Träger des Empfängeroszillators sicher auf den Träger des QAM-Empfangssignals nachführt.

FIG. 1

EP 0 571 788 A2

Die vorliegende Erfindung betrifft eine Anordnung zur Trägerrückgewinnung in einem Empfänger für Quadraturamplitudenmodulierte (QAM)-Signale, die Mittel aufweist, um aus einem QAM-Empfangssignal eine Information über die Phasenablage des von einem Empfängeroszillator erzeugten Trägers gegenüber dem Träger des QAM-Empfangssignals abzuleiten, welche Information dazu dient, um die Frequenz des Empfängeroszillators auf die Trägerfrequenz des QAM-Empfangssignals nachzuführen, wobei ein Gebietsentscheider die Ebene der komplexen QAM-Empfangssignalwerte in aktive Gebiete und in passive Gebiete aufteilt und Mittel vorhanden sind, die jedesmal, wenn ein QAM-Empfangssignalwert in ein aktives Gebiet gelangt, ein Phasenkorrektursignal abgeben, das die Nachführinformation für den Empfängeroszillator darstellt, und diese Mittel beim Austritt eines QAM-Empfangssignalwertes aus einem aktiven Gebiet in ein passives Gebiet das Phasenkorrektursignal aus dem vorhergehenden aktiven Gebiet beibehalten, wobei jeweils ein aktives Gebiet, dem eine rechtsgerichtete Phasendrehung veranlassendes Phasenkorrektursignal zugeordnet ist und ein aktives Gebiet, dem ein eine linksgerichtete Phasendrehung veranlassendes Phasenkorrektursignal (S) Zugeordnet ist, benachbart sind, und die aktiven Gebiete so gelegt und deren Grenzen so gewählt sind, daß bei einer rechtsgerichteten/linksgerichteten Drehung der QAM-Empfangssignalwerte aus dem synchronen Phasenzustand heraus um einen Winkel, der kleiner als 45° ist, keiner der QAM-Empfangssignalwerte ein eine linksgerichtete/rechtsgerichtete Phasendrehung bewirkendes aktives Gebiet durchläuft.

Zur kohärenten Demodulation von quadraturamplitudenmodulierten (QAM)-Signalen ist die Kenntnis der genauen Phase des Trägers dieser Signale erforderlich. Die Trägerphase muß deshalb aus dem jeweils empfangenen QAM-Signal rückgewonnen und dem Empfängeroszillator mitgeteilt werden. Diese sogenannte Trägerrückgewinnung wird in der Praxis mit Hilfe eines Phasenregelkreises (PLL) durchgeführt, in dem der Empfängeroszillator als Stellglied eingesetzt ist. Eine wesentliche Rolle spielt in diesem Phasenregelkreis ein Detektor, der die Aufgabe hat, die Phasenablage zwischen dem Träger des QAM-Empfangssignals und dem vom Empfängeroszillator erzeugten Träger zu schätzen und den Empfängeroszillator über ein Regelfilter so anzusteuern, daß diese Phasenablage möglichst klein wird und im Idealfall ganz verschwindet. Hierfür reicht es in der Regel aus, wenn der Detektor das Vorzeichen der Phasenablage erkennt, wie z.B. aus IEEE Transaction on Communications, Vol 36, No. 9, Sept. 1988, S. 1035-1043 hervorgeht.

Dieser Veröffentlichung ist auch der zuvor dargelegte "Acquisition mode" des Phasenregelkreises zu entnehmen. "Acquisition mode" nennt man den Betriebszustand, in welchem der Empfänger die Trägerfrequenz bzw. -phase des QAM-Empfangssignals noch nicht kennt, beispielsweise zu Beginn einer Datenübertragung oder nach einem Systemausfall.

Um Synchronität zwischen dem Träger des QAM-Empfangssignals und dem Träger des Empfängeroszillators zu erzielen, wird gemäß der IEEE Transactions on Communications ein Phasenkorrektursignal für den Empfängeroszillator erzeugt, das bestimmt, in welche Richtung der Empfängeroszillator bezüglich seiner Frequenz bzw. Phase nachgeführt wird. Wann und wie lange ein solches Phasenkorrektursignal für den Empfängeroszillator bereitgestellt wird, hängt davon ab, in welches Gebiet der Ebene der komplex betrachteten QAM-Empfangswerte ein jeweiliger Empfangswert fällt. Die Lage und Form der das Phasenkorrektursignal initiierenden sogenannten aktiven Gebiete haben Einfluß darauf, ob und wie schnell der Zustand der Trägersynchronität erreicht wird, so daß dann der Phasenregelkreis im "Tracking mode" weiter betrieben werden kann. Im "Tracking mode" werden nur noch geringe Trägerphasenabweichungen ausgeregelt.

Die Anordnung der Trägerrückgewinnung gemäß IEEE Transactions on Communications ist gerade bei hochstufigen QAM-Signalen (64-QAM, 256-QAM) bei großen anfänglichen Frequenzablagen nicht in der Lage, den Träger des Empfängeroszillators auf den Träger des QAM-Empfangssignals zu synchronisieren. Außerdem ist die bekannte Anordnung zu wenig robust gegenüber Signalverfälschungen, wie z.B. Pegelschwankungen, additive Störungen und Signalverzerrungen. Dies ist begründet in der Lage und Form der aktiven Gebiete sowie in der Art oder Operation, durch die dann aus dem Empfangssignal das Phasenkorrektursignal gebildet wird.

Eine einleitend dargelegte Anordnung, welche in der Lage ist, auch bei einer hohen anfänglichen Frequenzablage den Träger des Empfängeroszillators auf dem Träger des QAM-Empfangssignals zu synchronisieren, wobei der Synchronisationsvorgang gegenüber Signalverfälschungen unempfindlich ist, geht aus der DE 41 00 099 C1 hervor. Die darin beschriebene Lage der aktiven Gebiete im Bereich der äußeren QAM-Empfangssignalwerte ist allerdings nur möglich, wenn es sich um ein quadratisches Symbolalphabet handelt, d.h. die QAM-Empfangssignalwerte in der komplexen Ebene eine quadratische Fläche belegen. Oft werden aber kreisförmige Symbolalphabete verwendet, weil sie gegenüber quadratischen Symbolalphabeten einen geringeren mittleren Leistungsaufwand erfordern.

Der Erfindung liegt daher die Aufgabe zugrunde, eine Anordnung der eingangs genannten Art anzugeben, die auch bei nicht quadratischen Symbolalphabeten, den Träger des Empfängeroszillators auf den

2

Träger des QAM-Empfangssignals selbst bei einer hohen anfänglichen Frequenzablage zu synchronisieren vermag, wobei der Synchronisationsvorgang gegenüber Signalverfälschungen möglichst unempfindlich sein soll.

Diese Aufgabe wird erfindungsgemäß durch die Merkmale des Anspruchs 1 gelöst. Vorteilhafte Ausführungen der Erfindung gehen aus den Unteransprüchen hervor.

Die aktiven Gebiete in der komplexen Ebene sind bezüglich ihrer Lage und Form gemäß der Erfindung so gewählt, daß die dadurch initiierten Phasenkorrektursignale den Empfängeroszillator selbst bei großen anfänglichen Frequenzablagen und selbst bei stärkeren Verfälschungen der QAM-Empfangssignale sicher in den synchronen Zustand führen.

Anhand mehrerer in der Zeichnung dargestellter Ausführungsbeispiele wird nun die Erfindung näher erläutert.

Es zeigt

Figur 1 einen Phasenregelkreis als QAM-Empfäger,

Figur 2 einen Frequenzdetektor aus dem QAM-Empfänger,

Figur 3 die Ebene der komplexen QAM-Empfangssignalwerte,

Figur 4 eine zum Frequenzdetektor gehörende Speicherschaltung und

Fig. 5 einen Frequenzdetektor mit einem PROM als Gebietsentscheider.

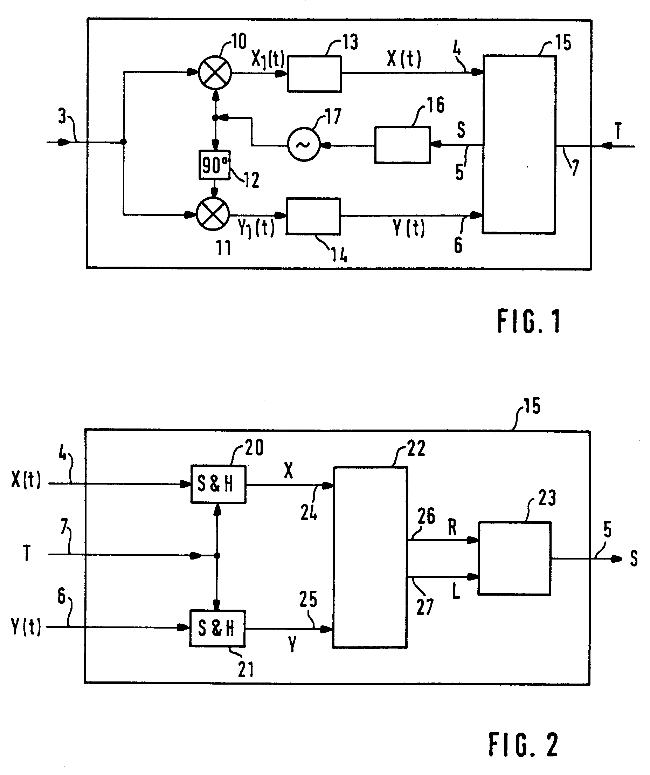

Die Figur 1 stellt einen Phasenregelkreis als QAM-Empfäger dar. Dieser Phasenregelkreis besitzt zwei Demodulatoren 10 und 11, die das ihnen über die Eingangsleitung 3 zugeführte QAM-Empfangssignal in die zwei Basisbandsignale $X_1(t)$ und $Y_1(t)$ umsetzen. In den beiden Basisbandsignalen $X_1(t)$ und $Y_1(t)$ unterdrükken Tiefpässe 13 und 14 unerwünschte Signalanteile und generieren so die zwei Signale $X(t)$ und $Y(t)$. Beide Signale $X(t)$ und $Y(t)$ werden einem Frequenzdetektor 15 zugeführt, der die Signale $X(t)$ und $Y(t)$ in einer später noch genauer beschriebenen Art und Weise auswertet und ein Phasenkorrektursignal S daraus ableitet, das über die Ausgangsleitung 5 an ein Regelfilter 16 abgegeben wird. Dieses Regelfilter 16 hat die Aufgabe, das Phasenkorrektursignal S zu glätten und es an einen steuerbaren Empfängeroszillator 17 weiterzuleiten, der ein Trägersignal für die Demodulatoren 10 und 11 generiert, wobei das Trägersignal für den Demodulator 11 von einem Phasenschieber 12 um 90° phasengedreht wird. Der Phasendetektor 15 benötigt zum Abtasten der aus dem QAM-Empfangssignal demodulierten, um 90° gegeneinander phasenversetzten Signalkomponenten $X(t)$ und $Y(t)$ einen über eine Leitung 7 zugeführten Abtasttakt T.

Die Signalkomponenten $X(t)$ und $Y(t)$ geben nur dann exakt den jeweiligen QAM-Empfangssignalwert wieder, wenn der vom Empfängeroszillator 17 erzeugte Träger mit dem Träger des QAM-Empfangssignals phasensynchron ist.

Zu Beginn einer Datenübertragung oder nach einem Systemausfall, dann wenn die Frequenzablage zwischen dem Träger des Empfägeroszillators 17 und dem Träger des QAM-Empfangssignals sehr groß ist, hat der Frequenzdetektor 15 ein solches Phasenkorrektursignal S zu erzeugen, das den Empfängeroszillator 17 auf den Träger des QAM-Empfangssignals nachführt.

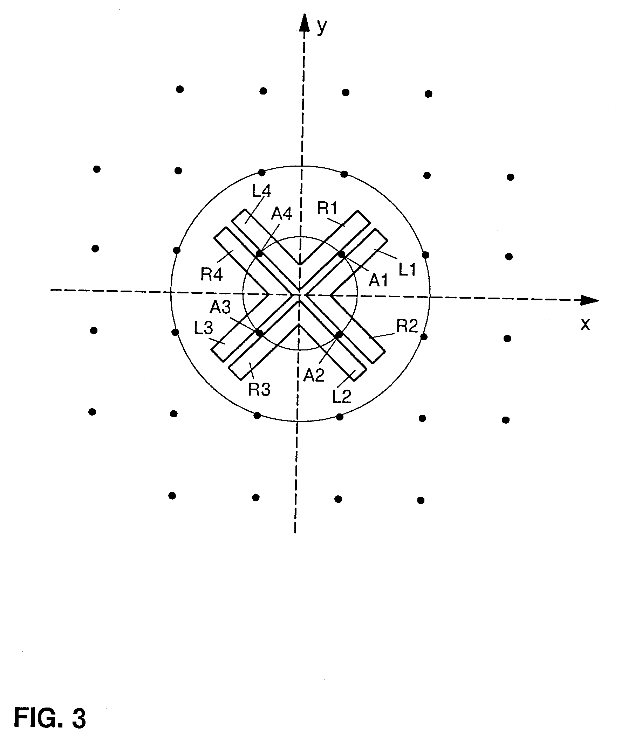

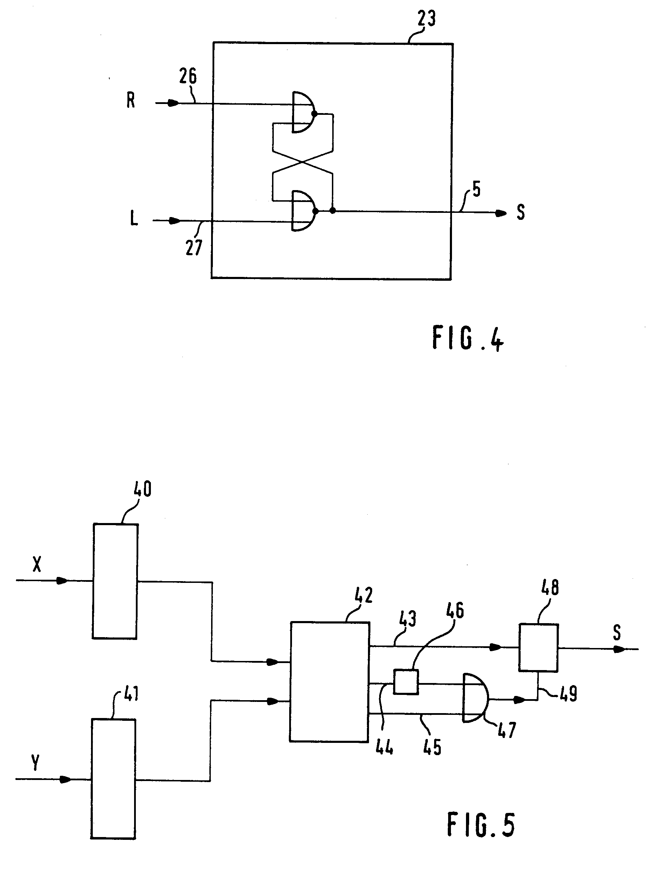

Die Figur 2 zeigt ein Blockschaltbild eines Frequenzdetektors 15, der die genannte Voraussetzung erfüllt. Der Frequenzdetektor 15 besitzt zwei Abtasthalteglieder 20 und 21, welche die über die Leitungen 4 und 6 zugeführten Empfangssignalkomponenten $X(t)$ und $Y(t)$ im Rhythmus des Abtastaktes T abtasten und zu jedem Taktzeitpunkt an ihren Ausgängen 24 und 25 die abgetasteten Empfangssignalkomponenten X und Y abgeben. Die beiden abgetasteten Empfangssignalkomponenten X und Y bilden jeweils zusammen einen QAM-Emfpangssignalwert. Betrachtet man jeden QAM-Empfangssignalwert als komplexe Größe mit dem Realteil X und dem Imaginärteil Y, so lassen sich alle möglichen QAM-Empfangssignalwerte in einer komplexen Ebene darstellen, wie der Fig. 3 zu entnehmen ist. In der komplexen Ebene der Fig. 3 ist beispielsweise ein kreisförmiges Symbolalphabet eingezeichnet. Der Frequenzdetektor 15 enthält einen sogenannten Gebietsentscheider 22, der aus den beiden Empfangssignalkomponenten X und Y an zwei Ausgängen 26 und 27 zwei Gebietsindikatorsignale R und L ableitet, aus denen eine noch näher zu beschreibende Schaltungsvorrichtung 23 das Phasenkorrektursignal S erzeugt. Zunächst soll die Funktionsweise des Gebietsentscheiders 22 und der Schaltungsvorrichtung 23 dargelegt werden, bevor dann anhand der Fig. 4 und 5 die Schaltungen detaillierter beschrieben werden.

Die in der Fig. 3 dargestellte komplexe Ebene der QAM-Empfangssignalwerte ist in sogenannte aktive Gebiete $R_1$, $R_2$, $R_3$, $R_4$ und $L_1$, $L_2$, $L_3$, $L_4$ und in sogenannte passive Gebiete, welche die Bereiche zwischen den aktiven Gebieten belegen, unterteilt. Die mit $A_1$, $A_2$, $A_3$ und $A_4$ gekennzeichneten Punkte in der komplexen Ebene stellen diejenigen QAM-Empfangssignalwerte dar, welche von allen vorkommenden QAM-Empfangssignalwerten dem Ursprung der komplexen Ebene am nächsten liegen. Bei dem in Fig. 3 dargestellten Ausführungsbeispiel liegen die innersten QAM-Empfangssignalwerte $A_1$, $A_2$, $A_3$ und $A_4$ auf den Winkelhalbierenden in den einzelnen Quadranten der komplexen Ebene. Für den Fall, daß der Empfängeroszillator 17 noch nicht auf die Trägerfrequenz des QAM-Empfangssignals eingerastet ist, laufen die in der Phasenregelschleife demodulierten Empfangssignalwerte auf Kreisen um den Ursprung der komplexen Ebene herum. Erst wenn der synchrone Zustand erreicht ist, decken sich die innersten demodulierten Empfangssignalwerte mit den Punkten $A_1$, $A_2$, $A_3$ und $A_4$ in der komplexen Ebene. Die aktiven Gebiete $R_1$, $R_2$, $R_3$, $R_4$ und $L_1$, $L_2$, $L_3$, $L_4$ werden sinnvollerweise achsensymmetrisch zu den Winkelhalbierenden in den einzelnen Quadranten der komplexen Ebene angeordnet. Die aktiven Gebiete $R_1$...$R_4$ und $L_1$...$L_4$ sind dem Gebietsentscheider 22 vorgegeben. Er stellt durch Schwellwertentscheidung fest, ob ein QAM-Empfangssignalwert in eines der aktiven Gebiete gelangt. Ist das der Fall, so gibt der Frequenzdetektor 15 ein Phasenkorrektursignal an den Empfängeroszillator 17 ab. Je nachdem, in welche Richtung die noch nicht synchronen QAM-Empfangssignalwerte sich um den Ursprung der komplexen Ebene herumdrehen, muß das Phasenkorrektursignal S den Empfängeroszillator 17 veranlassen, die Phase seines Trägers entgegen der Drehrichtung der QAM-Empfangssignalwerte zu verändern. Um also zu erreichen, daß bei einer Rechtsdrehung der QAM-Empfangssignalwerte ein linksgerichtetes Phasenkorrektursignal und bei einer Linksdrehung der QAM-Empfangssignalwerte ein rechtsgerichtetes Phasenkorrektursignal gebildet wird, durchlaufen die sich drehenden Empfangssignalwerte abwechselnd rechtsaktive Gebiete $R_1$...$R_4$ - in diesen Gebieten wird ein rechtsgerichtetes Phasenkorrektursignal S initiiert- und linksaktive Gebiete $L_1$...$L_4$ - in diesen Gebieten wird ein linksgerichtetes Phasenkorrektursignal S initiiert. Dabei können die in den einzelnen Quadranten der komplexen Ebene liegenden zwei aktiven Gebiete sehr eng benachbart sein. Der Abstand zwischen einem rechtsaktiven Gebiet und einem linksaktiven Gebiet in zwei unterschiedlichen Quadranten muß aber ausreichend groß gewählt werden, so daß von den aktiven Gebieten $R_1$...$R_4$, $L_1$...$L_4$, die von den QAM-Empfangssignalwerten der Reihe nach durchlaufen werden, im Mittel ein Phasenkorrektursignal S erzeugt wird, das in der Lage ist, den Empfängeroszillator 17 einzurasten. Tritt z.B. bei einer Rechtsdrehung ein QAM-Empfangssignalwert in das rechtsaktive Gebiet $R_1$ ein, so wird dort ein rechtsgerichtetes Phasenkorrektursignal S initiiert, das die ungewollte Rechtsdrehung der QAM-Empfangssignalwerte sogar noch unterstützt. Das sich direkt an das rechtsaktive Gebiet $R_1$ anschließende linksaktive Gebiet $L_1$ sorgt aber dafür, daß ein Phasenkorrektursignal S gebildet wird, das der Rechtsdrehung entgegenwirkt. Dieses Phasenkorrektursignal bleibt auch noch wirksam, nachdem der QAM-Empfangssignalwert dieses linksaktive Gebiet $L_1$ verläßt und ein zwischen ihm und dem in einem weiteren Abstand folgenden rechtsaktiven Gebiet $R_2$ liegendes passives Gebiet durchläuft. Es zeigt sich also, daß bei einer Rechtsdrehung der QAM-Empfangssignalwerte die linksdrehende Wirkung des Phasenkorrektursignals S im Mittel überwiegt, und entsprechend wird bei einer Linksdrehung der QAM-Empfangssignalwerte die rechtsdrehende Wirkung des Phasenkorrektursignals S ausschlaggebend sein.

Damit im Mittel ein den Empfängeroszillator 12 rasch und zuverlässig nachführendes Phasenkorrektursignal S entsteht, sind die Grenzen der aktiven Gebiete $R_1$...$R_4$, $L_1$...$L_4$ so zu wählen, daß bei einer rechtsgerichteten/linksgerichteten Drehung der QAM-Empfangssignalwerte aus dem synchronen Phasenzustand heraus um einen Winkel der kleiner als 45° ist, keiner dieser Werte ein linksatives/rechtsaktives Gebiet durchläuft. Beachtet man bei der Festlegung der Grenzen der aktiven Gebiete zudem, daß bei Phasensynchronität zwischen den beiden Trägern keine QAM-Empfangssignalwerte in ein aktives Gebiet $R_1$...$R_4$, $L_1$...$L_4$ fallen, so läßt sich dadurch u.U. noch eine Verbesserung der Phasenkorrektur erreichen.

Es wurde bereits gesagt, daß ein durch ein aktives Gebiet initiiertes Phasenkorrektursignal S beizubehalten ist, wenn ein QAM-Empfangssignalwert aus diesem aktiven Gebiet heraus in ein benachbartes passives Gebiet eintritt. Zu diesem Zweck ist die in Fig. 2 dargestellte Schaltungsvorrichtung 23 vorgesehen. Diese stellt jeweils eine von dem Gebietsentscheider 22 abgegebene Information über das Eintreffen eines QAM-Empfangssignalwertes in ein aktives Gebiet als Phasenkorrektursignal für den Empfägeroszillator 17 an ihrem Ausgang zur Verfügung. Gleichzeitig hält sie diese Information fest, um sie während der Zeit, in der der QAM-Empfangssignalwert das dem aktiven Gebiet nachfolgende passive Gebiet durchläuft, als Phasenkorrektursignal an den Empfängeroszillator 17 abzugeben.

Die Gebietsindikatorsignale R und L an den Ausgängen 26 und 27 des Gebietsentscheiders 22 erhalten in Abhängigkeit vom Gebiet, in das der jeweilige QAM-Empfangssignalwert X + jY auftritt, folgende Binärwerte:

| R | L | |
|---|---|---|
| 1 | 0 | wenn X + jY in einem rechtsaktiven Gebiet |
| 0 | 1 | wenn X + jY in einem linksativen Gebiet |
| 0 | 0 | wenn X + jY in einem passiven Gebiet |

Ein Beispiel zur Realisierung der Schaltungsvorrichtung 23, welche aus den an den beiden Ausgängen 26 und 27 des Gebietsentscheiders 22 erscheinenden Gebietsindikatorsignalen R und L das eigentliche Phasenkorrektursignal S für den Empfängeroszillator 17 bildet, zeigt die Fig. 4. Die Schaltungsvorrichtung 23 ist ein RS-Flip-Flop, das aus den beiden Gebietsindikatorsignalen R und L nach folgender Vorschrift das Phasenkorrektursignal $S_n$ ableitet, wobei $S_n$ das Phasenkorrektursignal zum Zeitpunkt n ist.:

$$S_n = R \lor (S_{n-1} \land \overline{L}) = L \lor \overline{(R \lor S_{n-1})},$$

wobei $S_n$ = 1, wenn ein QAM-Empfangssignalwert in einem rechtsaktiven Gebiet auftritt (R = 1, L = 0) und $S_n$ = 0 ist, wenn ein QAM-Empfangssignalwert in einem linksaktiven Gebiet auftritt (R = 0, L = 1). Tritt ein QAM-Empfangssignal aus einem aktiven Gebiet in ein passives Gebiet, so bleibt der zuvor in dem aktiven Gebiet ermittelte Phasenkorrekturwert $S_n^{-1}$ erhalten ($S_n$ = $S_{n-1}$ bei R = 0, L = 0).

Die Figur 5 zeigt eine alternative Ausführung für den das Phasenkorrektursignal S bildenden Frequenzdetektor. Der zugehörige Gebietsentscheider ist hier ein Speicher (PROM) 42, in dem die zu den aktiven und passiven Gebieten gehörenden Phasenkorrekturwerte abgespeichert sind. Entsprechend dem in EP-2 49 045 beschriebenen Verfahren ist die gesamte komplexe Ebene in Teilgebiete unterteilt, und jedem Teilgebiet ist ein Speicherplatz zugeordnet, in dem ein Phasenkorrektursignal eingeschrieben ist. Diese Phasenkorrektursignale sind so gewählt, daß sie zum einen eine schnelle und zuverlässige Trägerrückgewinnung ermöglichen und zum anderen im "Tracking mode" die dann noch auftretenden Trägerphasenabweichungen ausregeln.

Die QAM-Empfangssignalkomponenten X und Y werden in A/D-Wandlern 40, 41 digitalisiert und stellen somit eine Adresse für denjenigen Speicherplatz dar, der dem Teilgebiet der komplexen Ebene entspricht, in den der jeweilige QAM-Empfangssignalwert X + jY fällt.

Der Speicher 42 gibt an seinem Ausgang 43 das zu dem von dem jeweiligen Empfangssignalwert getroffenen Teilgebiet gehörende Phasenkorrektursignal ab, das im synchronen Zustand ("Tracking mode") von der nachfolgenden Schaltungseinheit 48 unverändert weitergereicht wird, indem man diese über das Steuersignal 49 transparent schaltet. Wie oben beschrieben worden ist, muß im "Akquistion mode" (nichtsynchroner Zustand) das Phasenkorrektursignal aus einem aktiven Gebiet beibehalten werden, wenn ein QAM-Empfangssignalwert in ein benachbartes passives Gebiet eintritt. Dafür sorgt die Schaltungseinheit 48, welche die im Zusammenhang mit der Schaltungsvorrichtung 23 dargelegten Gedächtnisfunktion hat. Sie schaltet das jeweils am Ausgang 43 des Speichers 42 anliegende Phasenkorrektursignal durch, wenn das an ihrem Eingang 49 anstehende Steuersignal z.B. eine logische "1" ist und hält das vorhergehende Phasenkorrektursignal, wenn an ihrem Eingang 49 eine logische "0" ansteht. Ein ODER-Gatter 47 stellt für den Eingang 49 der Schaltungseinheit 48 eine logische "0" bereit, wenn der betreffende QAM-Empfangssignalwert in ein passives Gebiet fällt und wenn gleichzeitig feststeht, daß der synchrone Zustand noch nicht erreicht ist (Acquisition mode). Die Information darüber, ob ein QAM-Empfangssignalwert in ein aktives oder ein passives Gebiet fällt, gibt der Speicher 42 über seinen Ausgang 45 an das ODER-Gatter 47 ab. Die Information darüber, ob der synchrone Zustand schon erreicht ist oder noch nicht, erfährt das ODER-Gatter 47 von einer Schaltung 46. Hier wird als Steuersignal in einem Lockdetektor ein sogenanntes "Lock-Signal" generiert, das z.B. im Acquisition mode den logischen Wert "0" und im Tracking mode den Wert "1" hat. Dazu wird beispielsweise im PROM eine Matrix der Form abgespeichert, daß innerhalb eines Rasterabstandes d um die erlaubten QAM-Zustände herum z.B. der Wert "1" und außerhalb der Wert "0" steht. Im Acquisition mode, d.h. bei rotierendem Träger, werden häufig Gebiete in größerem Abstand als d von erlaubten QAM-Zuständen getroffen, so daß sich durch zeitliche Mitteilung der aus dem PROM 42 ausgelesenen Werte im Block 46 ein nicht stark von Null abweichendes Signal ergibt.

Den Abstand d muß man so wählen, daß im Tracking mode auch bei starken Signalverzerrungen meistens Gebiete in der Matrix getroffen werden, denen eine "1" zugeordnet ist. Durch zeitliche Mitteilung erhält man im Tracking mode ein Signal in der Nähe von Eins und kann daraus durch Anwendung einer Entscheiderfunktion mit geeigneter Entscheiderschwelle das gewünschte Lock-Signal generieren. Mit dem ODER-Gatter 47 wird im Tracking mode die Haltefunktion über das Steuersignal 47 am Ausgang 49 des ODER-Gatters aufgehoben, so daß die Phasendiskriminatorsignale am Ausgang 43 des PROM 40 ständig als Regelsignale S zum Oszillator gelangen. Damit kann man einen unerwünschten großen Phasenjitter vermeiden, der durch Anwendung der Haltefunktion bei eingerastetem Träger entstehen würde.

Abweichend von der in Fig. 5 dargestellten Schaltung kann die Ansteuerung der Schaltungseinheit 48 über ihren Eingang 49 auch mit anderen logischen Signalen erfolgen. Es muß nur erfüllt sein, daß die Gedächtnisfunktion der Schaltungseinheit 48 im synchronen Zustand und bei Durchlaufen der QAM-Empfangssignale von aktiven Gebieten außer Kraft gesetzt wird.

EP 0 571 788 A2

**Patentansprüche**

1. Anordnung zur Trägerrückgewinnung in einem Empfänger für quadraturamplitudenmodulierte (QAM)-Signale, die Mittel aufweist, um aus einem QAM-Empfangssignal eine Information über die Phasenablage des von einem Empfängeroszillator erzeugten Trägers gegenüber dem Träger des QAM-Empfangssignals abzuleiten, welche Information dazu dient, um die Frequenz des Empfängeroszillators auf die Trägerfrequenz des QAM-Empfangssignals nachzuführen, wobei ein Gebietsentscheider die Ebene der komplexen QAM-Empfangssignalwerte in aktive Gebiete und in passive Gebiete aufteilt und Mittel vorhanden sind, die jedesmal, wenn ein QAM-Empfangssignalwert in ein aktives Gebiet gelangt, ein Phasenkorrektursignal abgeben, das die Nachführinformation für den Empfängeroszillator darstellt, und diese Mittel beim Austritt eines QAM-Empfangssignalwertes aus einem aktiven Gebiet in ein passives Gebiet das Phasenkorrektursignal aus dem vorhergehenden aktiven Gebiet beibehalten, wobei jeweils ein aktives Gebiet, dem eine rechtsgerichtete Phasendrehung veranlassendes Phasenkorrektursignal zugeordnet ist und ein aktives Gebiet, dem ein eine linksgerichtete Phasendrehung veranlassendes Phasenkorrektursignal (S) zugeordnet ist, benachbart sind, und die aktiven Gebiete so gelegt und deren Grenzen so gewählt sind, daß bei einer rechtsgerichteten/linksgerichteten Drehung der QAM-Empfangssignalwerte aus dem synchronen Phasenzustand heraus um einen Winkel, der kleiner als 45° ist, keiner der QAM-Empfangssignalwerte ein eine linksgerichtete/rechtsgerichtete Phasendrehung bewirkendes aktives Gebiet durchläuft, dadurch gekennzeichnet, daß die aktiven Gebiete ($R_1$, $R_2$, $R_3$, $R_4$, $L_1$, $L_2$, $L_3$, $L_4$) um das Zentrum der komplexen Ebene verteilt angeordnet und so bemessen sind, daß sie ausschließlich von den innersten QAM-Empfangssignalwerten ($A_1$, $A_2$, $A_3$, $A_4$) der komplexen Ebene durchlaufen werden.

2. Anordnung nach Anspruch 1, dadurch gekennzeichnet, daß die Grenzen der aktiven Gebiete ($R_1$, $R_2$, $R_3$, $R_4$, $L_1$, $L_2$, $L_3$, $L_4$) so gewählt sind, daß bei Phasensynchronität zwischen den beiden Trägern keiner der QAM-Empfangssignalwerte in ein aktives Gebiet ($R_1$, $R_2$, $R_3$, $R_4$, $L_1$, $L_2$, $L_3$, $L_4$) fällt.

3. Anordnung nach Anspruch 1, dadurch gekennzeichnet, daß in jedem Quadranten der komplexen Ebene jeweils ein eine rechtsgerichtete Phasendrehung bewirkendes aktives Gebiet ($R_1$, $R_2$, $R_3$, $R_4$) und ein eine linksgerichtete Phasendrehung bewirkendes aktives Gebiet ($L_1$, $L_2$, $L_3$, $L_4$) symmetrisch zur Winkelhalbierenden des Quadranten angeordnet sind.

4. Anordnung nach Anspruch 1, dadurch gekennzeichnet, daß eine Schaltungsvorrichtung (23) vorhanden ist, welche jeweils eine von dem Gebietsentscheider abgegebene Information (R, L) über das Eintreffen eines QAM-Empfangssignalswerts in ein aktives Gebiet ($R_1$, $R_2$, $R_3$, $R_4$, $L_1$, $L_2$, $L_3$, $L_4$) als Phasenkorrektursignal (S) für den Empfängeroszillator (17) an ihren Ausgang (5) zur Verfügung stellt und gleichzeitig diese Information festhält, um sie während der Zeit, in der der QAM-Empfangssignalwert das dem aktiven Gebiet ($R_1$, $R_2$, $R_3$, $R_4$, $L_1$, $L_2$, $L_3$, $L_4$) nachfolgende passive Gebiete durchläuft, als Phasenkorrektursignal (S) an den Empfängeroszillator (17) abzugeben.

5. Anordnung nach Anspruch 1, dadurch gekennzeichnet, daß der Gebietsentscheider (22) ein Speicher ist, in dem die zu den aktiven und passiven Gebieten gehörenden Phasenkorrekturwerte abgespeichert sind und daß jeder dem Gebietsentscheider zugeführte digitallisierte QAM-Empfangssignalwert eine Adresse für den Speicherplatz darstellt, der dem Gebiet der komplexem Ebene entspricht, in das der jeweilige QAM-Empfangssignalwert fällt.

6. Anordnung nach einem der bisherigen Ansprüche, dadurch gekennzeichnet, daß gesteuert durch eine Schaltungsvorrichtung (46, 47, 48), die den synchronen Zustand erkennt, die Haltefunktion für die Nachführinformation des Empfängeroszillators nach Erreichen des synchronen Phasenzustandes abgeschaltet wird.

6

FIG. 1

FIG. 2

**FIG. 3**

FIG.4

FIG.5